# EUROPÄISCHE PATENTANMELDUNG

(11) **EP 3 869 792 A1**
(43) Veröffentlichungstag der Anmeldung: **25.08.2021**
(21) Anmeldenummer: 21154171.9
(22) Anmeldetag: 29.01.2021
(51) Int. Cl.: H04N 5/341, H04N 5/353, G02B 21/00

(54) **VERFAHREN ZUM AUSLESEN VON BILDDATEN UND ZUM ERFASSEN EINES OBJEKTS UNTER VERWENDUNG EINES ROLLING-SHUTTERS, BILDAUFNAHMEVORRICHTUNG UND LICHTSCHEIBENMIKROSKOP**

(30) Priorität: 21.02.2020 DE 102020104634
(71) Anmelder: PCO AG, 93309 Kelheim (DE)
(72) Erfinder: Ott, Dr. Emil, 93309 Kelheim (DE)
(74) Vertreter: Glück Kritzenberger Patentanwälte PartGmbB

(57) **Zusammenfassung**

Beschrieben wird ein Verfahren zum Auslesen der Bilddaten einer Bildsensoreinheit (12) mittels einer Bildaufnahmesteuereinheit (13), wobei die Bildsensoreinheit (12) eine Vielzahl von in einer Sensormatrix (15) angeordneten Bildsensoren (16) umfasst, wobei die Bildsensoren (16) zeilenweise angesteuert und ausgelesen werden, bei jedem Aufnahmeschritt zumindest eine Bildzeile (17) ausgelesen und/oder die Belichtung von zumindest einer Bildzeile (17) gestartet wird und die aufzunehmenden Bildzeilen (17) von einer Zeilenausgangskonfiguration aus nach jeweils einem Aufnahmeschritt verändert werden, wobei die aufzunehmenden Bildzeilen (17) nach jedem Aufnahmeschritt in eine vorgegebene Abtastrichtung (AR) versetzt werden. Das Verfahren zeichnet sich insbesondere dadurch aus, dass die aufzunehmenden Bildzeilen (17) nach einer vorgegebenen Anzahl von Aufnahmeschritten entgegen der Abtastrichtung (AR) derart um eine vorgegebene Anzahl von Bildzeilen (17) versetzt werden, dass die sich dann ergebende Zeilenzwischenkonfiguration gegenüber der Zeilenausgangskonfiguration versetzt ist, so dass die aufzunehmenden Bildzeilen (17) im zeitlichen Verlauf ein schiefes Sägezahnmuster ergeben. Des Weiteren werden ein Verfahren zum Erfassen eines Objekts (OBJ) mittels eines Lichtscheibenmikroskops (1), eine Bildaufnahmevorrichtung (11) sowie ein Lichtscheibenmikroskop (1) beschrieben.

## Beschreibung

### Technisches Gebiet

Die Erfindung bezieht sich auf ein Verfahren zum Auslesen von Bilddaten einer Bildsensoreinheit gemäß dem Oberbegriff des Anspruchs 1, ein Verfahren zum Erfassen eines Objekts mittels eines Lichtscheibenmikroskops gemäß dem Oberbegriff des Anspruchs 8, eine Bildaufnahmevorrichtung gemäß dem Oberbegriff des Anspruchs 13 und ein Lichtscheibenmikroskop gemäß dem Oberbegriff des Anspruchs 15.

### Stand der Technik

Verfahren und ein zugehöriges System zur Bilderfassung durch Abtasten eines Objektes mit Beleuchtungslicht zum Erfassen eines Bildes eines Objektes sind beispielsweise aus der DE 11 2014 000 240 B4 oder der DE 11 2014 000 195 B4 bekannt.

Dabei sind Bildsensoreinheiten zur Aufnahme von zweidimensionalen Bildern eines Objektes hinlänglich bekannt, die in so genannten Bildaufnahmevorrichtungen, beispielsweise Kameras bzw. Kamerasystemen oder industriellen Kamerasystemen Verwendung finden. Häufig werden in derartigen Kameras halbleiterbasierte Bildsensoreinheiten wie beispielsweise so genannte CMOS ("Komplementär-MetallOxid-Halbleiter")-Bildsensoreinheiten verwendet, mittels denen eine digitale Bildaufnahme in Form einer Rastergrafik umfassend eine Vielzahl an Bildpunkten bzw. so genannten Pixel erzeugt wird. Derartige Kameras weisen eine Vielzahl von matrixförmig in einer Sensormatrix angeordneten Bildsensoreinheiten auf, d.h. die Bildsensoreinheiten sind entlang mehreren Bildzeilen und Bildspalten in einer Sensorebene angeordnet und werden hierbei vorzugsweise zeilen- oder spaltenabhängig angesteuert.

Eine derartige CMOS-Bildsensoreinheit ist in CMOS-Schaltungstechnik realisiert und besteht aus einer elektronischen Schaltung, die u.a. zumindest eine Photodiode, zumindest einen Transistor sowie zumindest ein Ladungsspeicherelement in Form einer Kapazität umfasst. Die Photodiode wandelt das einfallende Licht in eine elektrische Ladung bzw. elektrische Spannung um, die gesteuert über den zumindest einen Transistor auf das Ladungsspeicherelement übertragen wird. Die gespeicherte Spannung wird durch nachfolgende Schaltungsteile weiterverarbeitet und digitalisiert, und somit als Bildpunktinhalt ausgelesen. Durch taktgesteuertes Schalten der Transistoren wird für eine vorgegebene Belichtungszeit die von der Photodiode erzeugte elektrische Ladung erfasst, zwischengespeichert und anschließend ausgelesen. Nach dem Auslesen wird die gespeicherte Ladung wiederum taktgesteuert gelöscht und der beschriebene Aufnahmezyklus beginnt von vorne.

Bei CMOS-Kamerasensoren, die nach dem so genannten "Rolling-Shutter"-Ausleseprinzip arbeiten, werden die erfassten Szenen bzw. Bilder zeilenweise abgetastet bzw. ausgelesen. Selbstverständlich ist auch ein spaltenweises Abtasten bzw. Auslesen möglich, dies entspricht dann einer Drehung des CMOS-Kamerasensors um 90°. Während der Rolling-Shutter-Effekt beim Fotografieren ein meist unerwünschter Effekt ist, wird er beispielsweise in der DE 11 2014 000 240 B4 oder der DE 11 2014 000 195 B4 in Verbindung mit einem Mikroskopsystem und einer Lichtabtasteinheit vorteilhaft ausgenutzt. Bei dem genannten Mikroskopsystem wird ein zu untersuchendes Objekt mittels einer dünnen Lichtscheibe beleuchtet. Um das gesamte Objekt zu erfassen, tastet die Lichtabtasteinheit das Objekt mittels der dünnen Lichtscheibe beispielsweise zeilenweise ab. Folgt nun der Rolling-Shutter dem beleuchteten Bereich des Objekts, so wird nur Licht aus dem beleuchteten Bereich des Objekts aufgenommen und unerwünschtes Streulicht aus den nicht beleuchteten Bereichen des Objekts nicht aufgenommen. Es ergibt sich also insgesamt eine verbesserte Aufnahme des Objekts.

Typisches Problem dieser bekannten Lösungen ist, dass zeitliche Veränderungen des Objekts lediglich auf einer Zeitskala erfasst werden, die dem zeitlichen Abstand zwischen zwei Abtastungen des Objekts mittels der Lichtabtasteinheit entsprechen.

Trotz der aus dem Stand der Technik bekannten Lösungen bleibt daher eine verbesserte zeitliche Auflösung der Aufnahmen des Objekts ein zentrales Ziel der Weiterentwicklung von Verfahren und Vorrichtungen zum Auslesen von Bilddaten einer Bildsensoreinheit und zum Erfassen eines Objekts mittels eines Lichtscheibenmikroskops. Des Weiteren ist auch stets die Verbesserung der räumlichen Auflösung von Bildsensoreinheiten bzw. Lichtscheibenmikroskopen ein zentrales Ziel der Weiterentwicklung derartiger Verfahren und Vorrichtungen.

### Darstellung der Erfindung

Aufgabe der vorliegenden Erfindung ist es daher, Verfahren und Vorrichtungen zur Verfügung zu stellen, die die Nachteile des Standes der Technik überwinden und insbesondere die zeitliche und/oder räumliche Auflösung von Bildsensoreinheiten bzw. Lichtscheibenmikroskopen weiter verbessern. Diese Aufgabe wird durch ein Verfahren zum Auslesen der Bilddaten einer Bildsensoreinheit gemäß Patentanspruch 1, ein Verfahren zum Erfassen eines Objekts mittels eines Lichtscheibenmikroskops gemäß Patentanspruch 8, eine Bildaufnahmevorrichtung gemäß Patentanspruch 13 und ein Lichtscheibenmikroskop gemäß Patentanspruch 15 gelöst. Weitere vorteilhafte Aspekte, Details und Ausgestaltungen der Erfindung ergeben sich aus den abhängigen Ansprüchen, der Beschreibung in Verbindung mit den Zeichnungen.

Vorgeschlagen wird ein Verfahren zum Auslesen der Bilddaten einer Bildsensoreinheit mittels einer Bildaufnahmesteuereinheit. Die Bildaufnahmesteuereinheit steuert dabei insbesondere den Beginn und das Ende von Aufnahmen der Bildsensoreinheit sowie das eigentliche Auslesen der von der Bildsensoreinheit erfassten Bilddaten. Die Bildsensoreinheit umfasst dabei eine Vielzahl von in einer Sensormatrix angeordneten Bildsensoren, die auch Pixel genannt werden. In der Sensormatrix sind die Bildsensoren zeilen- und spaltenweise angeordnet und werden zeilenweise angesteuert und ausgelesen. Selbstverständlich können die Bildsensoren auch spaltenweise angesteuert und ausgelesen werden, dies entspricht einer Drehung der Bildsensoreinheit um 90°. Bei jedem Aufnahmeschritt wird zumindest eine Bildzeile ausgelesen und/oder die Belichtung von zumindest einer Bildzeile gestartet. Es ist möglich, dass bei einem Aufnahmeschritt mehr als eine Bildzeile ausgelesen und/oder die Belichtung von mehr als einer Bildzeile gestartet wird, dies ist jedoch für das vorgeschlagene Verfahren nicht relevant. Im Folgenden wird das Verfahren derart beschrieben, dass bei jedem Aufnahmeschritt genau eine Bildzeile ausgelesen und die Belichtung von genau einer Bildzeile gestartet wird. Eine Veränderung des Verfahrens dahingehend, dass bei jedem Aufnahmeschritt mehr als eine Bildzeile ausgelesen und/oder deren Belichtung gestartet wird bzw. bei jedem Aufnahmeschritt nur eine Bildzeile ausgelesen oder die Belichtung von einer Bildzeile gestartet wird, ist für den Fachmann leicht durchführbar. Im letztgenannten Fall ist es beispielsweise möglich, pro Aufnahmeschritt abwechselnd eine Bildzeile auszulesen und die Belichtung einer Bildzeile zu starten.

Das Auslesen der Bilddaten der Bildsensoreinheit geht von einer Zeilenausgangskonfiguration von aufzunehmenden Bildzeilen aus. Diese Zeilenausgangskonfiguration umfasst eine oder mehrere Bildzeilen, deren Belichtung schon gestartet aber noch nicht beendet ist. Es kann sich hier beispielsweise um mehrere zusammenhängende Bildzeilen handeln. Die Zeilenausgangskonfiguration wird dabei zum Beispiel ausgehend von einem Bildsensor erreicht, bei dem für keine der Bildzeilen eine Belichtung aktiv ist. Es werden sodann so lange bei jedem Aufnahmeschritt für eine oder mehrere Bildzeilen der Zeilenausgangskonfiguration die Belichtung gestartet bis die Belichtung für alle Bildzeilen der Zeilenausgangskonfiguration gestartet ist. Die aufzunehmenden Bildzeilen werden dann von der Zeilenausgangskonfiguration aus nach jeweils einem Aufnahmeschritt verändert, wobei die aufzunehmenden Bildzeilen nach jedem Aufnahmeschritt in eine vorgegebene Abtastrichtung versetzt werden. Es wird also insbesondere die Belichtung von einer Bildzeile am entgegen der Abtastrichtung gelegenen Ende der Zeilenkonfiguration beendet und diese Bildzeile ausgelesen und die Belichtung einer in Abtastrichtung hinter der Zeilenkonfiguration gelegenen Bildzeile gestartet. Es ergibt sich mithin ein "Rolling-Shutter".

Erfindungsgemäß werden die aufzunehmenden Bildzeilen nach einer vorgegebenen Anzahl von Aufnahmeschritten entgegen der Abtastrichtung derart um eine vorgegebene Anzahl von Bildzeilen versetzt, dass die sich dann ergebende Zeilenzwischenkonfiguration gegenüber der Zeilenausgangskonfiguration versetzt ist. Werden beispielsweise bei jedem Aufnahmeschritt die aufzunehmenden Bildzeilen um jeweils eine Bildzeile versetzt, so darf die vorgegebene Anzahl von Bildzeilen, um die die aufzunehmenden Bildzeilen entgegen der Abtastrichtung versetzt werden, nicht gleich der vorgegebenen Anzahl von Aufnahmeschritten sein, nach denen dieser Versatz erfolgt. Im zeitlichen Verlauf ergeben die aufzunehmenden Bildzeilen also ein schiefes Sägezahnmuster. Das schiefe Sägezahnmuster bedingt dabei sowohl eine verbesserte zeitliche als auch eine verbesserte räumliche Auflösung als ein herkömmlicher Rolling-Shutter, der die Zeilenausgangskonfiguration mit entsprechend verlangsamten Aufnahmeschritten in die Zeilenzwischenkonfiguration überführt.

Vorteilhafterweise werden die aufzunehmenden Bildzeilen nach jedem Aufnahmeschritt um eine vorgegebene Anzahl an Bildzeilen, vorzugsweise um eine Bildzeile, in Abtastrichtung versetzt. Der Versatz um eine vorgegebene Anzahl an Bildzeilen bedeutet ein gleichmäßiges Fortschreiten der aufzunehmenden Bildzeilen, was insbesondere die anschließende Auswertung der Bilddaten erleichtert. Beträgt der Versatz nach jedem Aufnahmeschritt genau eine Bildzeile, so ist dies der für den gegebenen Bildsensor feinste Versatz, was auch die beste räumliche Auflösung ermöglicht.

Es ist von Vorteil, wenn die Zeilenzwischenkonfiguration gegenüber der Zeilenausgangskonfiguration in Abtastrichtung versetzt ist. Der Sprung um die vorgegebene Anzahl von Aufnahmeschritten entgegen der Abtastrichtung wird hierdurch relativ klein gehalten. Es ist aber auch denkbar, dass die Zeilenzwischenkonfiguration gegenüber der Zeilenausgangskonfiguration entgegen der Abtastrichtung versetzt ist, was mit einem dementsprechend großen Sprung entgegen der Abtastrichtung einhergeht.

Vorteilhaft ist es, wenn zumindest zeitweise die aufzunehmenden Bildzeilen einen zusammenhängenden Bildzeilenbereich ergeben. Dabei ergeben insbesondere die aufzunehmenden Bildzeilen der Zeilenausgangskonfiguration einen zusammenhängenden Bildzeilenbereich. Das resultierende Abtastmuster ist dadurch besonders klar und die anschließende Auswertung der Bilddaten wird vereinfacht.

Vorteilhafterweise wird die Abtastrichtung nach einer vorgegebenen Anzahl von Aufnahmeschritten umgekehrt. Diese vorgegebene Anzahl von Aufnahmeschritten kann beispielsweise derart gewählt werden, dass die Umkehrung der Abtastrichtung dann erfolgt, wenn die aufzunehmenden Bildzeilen einen Rand der Sensormatrix erreicht haben. Dann wird die Sensormatrix mit einem schiefen Sägezahnmuster in die eine Richtung und anschließend mit dem umgekehrten schiefen Sägezahnmuster in die andere Richtung abgetastet.

Es ist von Vorteil, wenn eine Wartezeit zwischen zwei Aufnahmeschritten vorgegeben ist oder eingestellt wird. Über diese Wartezeit wird die Geschwindigkeit vorgegeben bzw. eingestellt, mit der die aufzunehmenden Bildzeilen auf der Sensormatrix voranschreiten. Die Wartezeit beeinflusst damit auch die Belichtungszeit der einzelnen Bildsensoren und die zeitliche Auflösung der Aufnahme.

Vorteilhaft ist es, wenn die Bildsensoreinheit eine CMOS-Bildsensoreinheit ist und die Bildsensoren CMOS-Bildsensoren sind. Durch ihre Bauart bedingt unterstützen CMOS-Bildsensoreinheiten das zeilenweise Belichten und Auslesen der CMOS-Bildsensoren und es existieren CMOS-Bildsensoreinheiten, bei denen die Bildzeilen, die belichtet bzw. ausgelesen werden sollen, frei gewählt werden können. Darüber hinaus sind CMOS-Bildsensoreinheiten weit verbreitet und damit relativ kostengünstig.

Ferner wird ein Verfahren zum Erfassen eines Objekts mittels eines Lichtscheibenmikroskops vorgeschlagen. Dabei wird Beleuchtungslicht von einer Lichtquelle ausgegeben und von einer Optikanordnung geführt. Dabei sind verschiedene Ausgestaltungen der Optikanordnung möglich, die dem Fachmann bekannt sind. Das Beleuchtungslicht wird dabei von der Optikanordnung derart geführt, dass es nur einen Bereich, vorzugsweise eine Scheibe, des Objekts beleuchtet. Die Optikanordnung weist unter anderem eine Ablenkeinheit auf, die von einer Ablenksteuereinheit gesteuert wird. Mittels der Ablenkeinheit wird das Beleuchtungslicht derart abgelenkt, dass fortlaufende Bereiche des Objekts beleuchtet werden. Vorzugsweise wird das Objekt scheibenweise beispielsweise von oben nach unten und/oder zurück abgetastet. Dabei wird vom Objekt Licht abgegeben, insbesondere durch Streuung oder durch Fluoreszenz. Das vom Objekt abgegebene Licht wird von einer Objektiveinheit geführt und vorzugsweise auf eine Bildsensoreinheit fokussiert. Von der Bildsensoreinheit wird das vom Objekt abgegebene Licht dann erfasst. Dabei wird die Bildsensoreinheit, insbesondere der Beginn und das Ende von Aufnahmen sowie das eigentliche Auslesen der erfassten Bilddaten, von einer Bildaufnahmesteuereinheit gesteuert.

Erfindungsgemäß steuert die Bildaufnahmesteuereinheit die Bildsensoreinheit nach dem Verfahren gemäß der vorangegangenen Beschreibung. Insbesondere werden also die aufzunehmenden Bildzeilen nach jeweils einem Aufnahmeschritt in eine vorgegebene Abtastrichtung versetzt und nach einer vorgegebenen Anzahl von Aufnahmeschritten entgegen der Abtastrichtung derart um eine vorgegebene Anzahl von Bildzeilen versetzt, dass eine sich dann ergebende Zeilenzwischenkonfiguration gegenüber einer Zeilenausgangskonfiguration versetzt ist, so dass die aufzunehmenden Bildzeilen im zeitlichen Verlauf ein schiefes Sägezahnmuster ergeben. Des Weiteren kommuniziert die Ablenksteuereinheit mit der Bildaufnahmesteuereinheit derart, dass die von der Bildsensoreinheit aufzunehmenden Bildzeilen den vom Beleuchtungslicht beleuchteten Bereichen des Objekts folgen. Das heißt, dass eine Einhüllende des schiefen Sägezahnmusters, also ein Band, das die aufzunehmenden Bildzeilen umfasst, ungefähr mit dem Band, das vom Beleuchtungslicht überstrichen wird, übereinstimmt. Der vom Beleuchtungslicht beleuchtete Bereich des Objekts wird also mit dem schiefen Sägezahnmuster abgetastet. Im Vergleich zu einem Rolling-Shutter bietet das Abtasten mit dem schiefen Sägezahnmuster jedoch eine höhere zeitliche und räumliche Auflösung.

Vorteilhafterweise steuert die Ablenksteuereinheit die Bildaufnahmesteuereinheit, die Ablenksteuereinheit ist also der Master und die Bildaufnahmesteuereinheit der Slave. Beispielhaft sendet die Ablenksteuereinheit bei Fortschreiten des Beleuchtungsbereichs um einen vorbestimmten Wert der Bildaufnahmesteuereinheit ein Signal, wodurch die Bildaufnahmesteuereinheit den nächsten Aufnahmeschritt durchführt.

Es kann auch von Vorteil sein, wenn die Bildaufnahmesteuereinheit die Ablenksteuereinheit steuert, die Bildaufnahmesteuereinheit also der Master und die Ablenksteuereinheit der Slave ist. Dann sendet beispielsweise die Bildaufnahmesteuereinheit bei jedem Aufnahmeschritt der Ablenksteuereinheit ein Signal, woraufhin die Ablenksteuereinheit die Ablenkeinheit derart steuert, dass der vom Beleuchtungslicht beleuchtete Bereich des Objekts um einen vorbestimmten Wert verschoben wird.

Vorzugsweise ist die Kommunikation zwischen Ablenksteuereinheit und Bildaufnahmesteuereinheit bidirektional, so dass der jeweilige Slave dem Master beispielsweise Fehlercodes schicken kann, falls ein ordnungsgemäßer Betrieb nicht möglich ist.

Vorteilhaft ist es, wenn die aufgenommenen Bilddaten mittels einer Auswerteeinheit ausgewertet werden. Die Auswerteeinheit kann dabei beispielsweise ein dedizierter Bildprozessor oder ein Computer mit der entsprechenden Software sein. Bei der Auswertung ist dabei insbesondere der räumliche und zeitliche Verlauf der Bilddaten von Interesse. Algorithmen zur Auswertung der Bilddaten können dabei unter anderem vom untersuchten Objekt abhängen.

Vorteilhafterweise wird bei der Auswertung der Bilddaten mittels der Auswerteeinheit eine Dekonvolution durchgeführt. Diese Dekonvolution kann dabei in räumlicher und/oder zeitlicher Richtung durchgeführt werden und führt zu einer höheren räumlichen bzw. zeitlichen Auflösung. In räumlicher Richtung wird die Dekonvolution vorzugsweise unter Berücksichtigung eines bekannten Strahlprofils des Beleuchtungslichts durchgeführt und in zeitlicher Richtung kann die Dekonvolution mittels Informationen über bekannte zeitliche Abläufe verbessert werden.

Des Weiteren wird eine Bildaufnahmevorrichtung zum Aufnehmen eines Bilds von einem Objekt vorgeschlagen. Die Bildaufnahmevorrichtung umfasst eine Objektiveinheit, eine Bildsensoreinheit und eine Bildaufnahmesteuereinheit. Die Objektiveinheit führt dabei das Licht vom Objekt zur Bildsensoreinheit. Derartige Objektiveinheiten sind dem Fachmann bestens bekannt, wobei sich verschiedene Objektiveinheiten beispielsweise in der Vergrößerung oder der maximal möglichen Auflösung unterscheiden können. Das von der Objektiveinheit geführte Licht wird von der Bildsensoreinheit erfasst, wobei die Bildsensoreinheit eine Vielzahl von in einer Sensormatrix angeordneten Bildsensoren umfasst. In der Sensormatrix sind die Bildsensoren, die auch Pixel genannt werden, zeilen- und spaltenweise angeordnet. Die Bildsensoreinheit ist von der Bildaufnahmesteuereinheit steuerbar, wobei die Bildsensoren zeilenweise mittels der Bildaufnahmesteuereinheit ansteuerbar und auslesbar sind. Selbstverständlich ist es alternativ auch möglich, dass die Bildsensoren spaltenweise ansteuerbar und auslesbar sind, was einer Drehung der Bildsensoreinheit um 90° entspricht.

Erfindungsgemäß ist die Bildaufnahmesteuereinheit dazu ausgebildet, das Verfahren gemäß der vorangegangenen Beschreibung durchzuführen. Insbesondere ist also die Bildaufnahmesteuereinheit dazu ausgebildet, bei jedem Aufnahmeschritt zumindest eine Bildzeile auszulesen und/oder die Belichtung von zumindest einer Bildzeile zu starten. Des Weiteren ist die Bildaufnahmesteuereinheit derart ausgebildet, dass die aufzunehmenden Bildzeilen von einer Zeilenausgangskonfiguration aus nach jeweils einem Aufnahmeschritt verändert, nämlich in eine vorgegebene Abtastrichtung versetzt, werden. Ferner ist die Bildaufnahmesteuereinheit dazu ausgebildet, die aufzunehmenden Bildzeilen nach einer vorgegebenen Anzahl von Aufnahmeschritten entgegen der Abtastrichtung derart um eine vorgegebene Anzahl von Bildzeilen zu versetzen, dass die sich dann ergebende Zeilenzwischenkonfiguration gegenüber der Zeilenausgangskonfiguration versetzt ist, so dass die aufzunehmenden Bildzeilen im zeitlichen Verlauf ein schiefes Sägezahnmuster ergeben. Durch das schiefe Sägezahnmuster hat die Bildaufnahmevorrichtung sowohl eine verbesserte zeitliche als auch eine verbesserte räumliche Auflösung als eine Bildaufnahmevorrichtung mit einem herkömmlichen Rolling-Shutter.

Es ist von Vorteil, wenn die Bildsensoreinheit eine CMOS-Bildsensoreinheit ist und die Bildsensoren CMOS-Bildsensoren sind. Durch ihre Bauart bedingt unterstützen CMOS-Bildsensoreinheiten das zeilenweise Belichten und Auslesen der CMOS-Bildsensoren und es existieren CMOS-Bildsensoreinheiten, bei denen die Bildzeilen, die belichtet bzw. ausgelesen werden sollen, frei gewählt werden können. Darüber hinaus sind CMOS-Bildsensoreinheiten weit verbreitet und damit relativ kostengünstig.

Ferner wird ein Lichtscheibenmikroskop zum Abtasten eines Objekts vorgeschlagen. Ein solches Lichtscheibenmikroskop umfasst eine Lichtquelle zum Ausgeben des Beleuchtungslichts sowie eine Optikanordnung zum Führen des Beleuchtungslichts von der Lichtquelle zum Objekt. Bei Beleuchtung des Objekts wird von diesem, beispielsweise durch Streuung oder durch Fluoreszenz, wiederum Licht abgegeben. Dieses vom Objekt abgegebene Licht wird von einer Objektiveinheit des Lichtscheibenmikroskops zu einer Bildsensoreinheit des Lichtscheibenmikroskops geführt. Die Bildsensoreinheit ist dabei zum Erfassen des vom Objekt abgegebenen Lichts ausgebildet und wird von einer Bildaufnahmesteuereinheit gesteuert. Des Weiteren umfasst die Optikanordnung eine Ablenkeinheit zum Ablenken des Beleuchtungslichts, wobei die Ablenkeinheit von einer Ablenksteuereinheit gesteuert wird. Das Beleuchtungslicht beleuchtet dabei stets nur einen Bereich, vorzugsweise eine Scheibe, des Objekts. Durch das Ablenken des Beleuchtungslichts wird das gesamte Objekt von diesem beleuchteten Bereich abgetastet. Ferner umfasst das Lichtscheibenmikroskop Kommunikationsmittel zur Kommunikation zwischen der Bildaufnahmesteuereinheit und der Ablenksteuereinheit, so dass die Bildaufnahmesteuereinheit die Bildsensoreinheit derart steuert, dass stets ein beleuchteter Bereich des Objekts von der Bildsensoreinheit erfasst wird.

Erfindungsgemäß sind die Bildaufnahmesteuereinheit und die Ablenksteuereinheit dazu ausgebildet, das Verfahren gemäß der vorangegangenen Beschreibung durchzuführen. Insbesondere wird also die Bildsensoreinheit von der Bildaufnahmesteuereinheit derart gesteuert, dass in einer Sensormatrix angeordnete Bildsensoren der Bildsensoreinheit zeilenweise angesteuert und ausgelesen werden, wobei bei jedem Aufnahmeschritt zumindest eine Bildzeile ausgelesen und/oder die Belichtung von zumindest einer Bildzeile gestartet wird. Die Bildaufnahmesteuereinheit ist dabei derart ausgebildet, dass die aufzunehmenden Bildzeilen von einer Zeilenausgangskonfiguration aus nach jeweils einem Aufnahmeschritt in eine vorgegebene Abtastrichtung versetzt werden und nach einer vorgegebenen Anzahl von Aufnahmeschritten entgegen der Abtastrichtung derart um eine vorgegebene Anzahl von Bildzeilen versetzt werden, dass die sich dann ergebende Zeilenzwischenkonfiguration gegenüber der Zeilenausgangskonfiguration versetzt ist, so dass die aufzunehmenden Bildzeilen im zeitlichen Verlauf ein schiefes Sägezahnmuster ergeben. Schließlich kommuniziert die Ablenksteuereinheit mit der Bildaufnahmesteuereinheit derart, dass die von der Bildsensoreinheit aufzunehmenden Bildzeilen den vom Beleuchtungslicht beleuchteten Bereichen des Objekts folgen. Die aufzunehmenden Bildzeilen ergeben dabei das schiefe Sägezahnmuster, so dass eine hohe räumliche und zeitliche Auflösung des Objekts erzielt wird.

Vorteilhaft ist es, wenn das Lichtscheibenmikroskop eine Auswerteeinheit zum Auswerten der von der Bildsensoreinheit aufgenommenen Bilddaten aufweist. Die Auswerteeinheit kann dabei beispielsweise ein dedizierter Bildprozessor oder ein Computer mit der entsprechenden Software sein. Bei der Auswertung ist dabei insbesondere der räumliche und zeitliche Verlauf der Bilddaten von Interesse. Algorithmen zur Auswertung der Bilddaten können dabei unter anderem vom untersuchten Objekt abhängen und vorzugsweise eine Dekonvolution in räumlicher und/oder zeitlicher Richtung umfassen.

### Kurze Beschreibung der Zeichnungen

Die Erfindung soll nachfolgend anhand von Ausführungsbeispielen im Zusammenhang mit den Zeichnungen näher erläutert werden. Es zeigen
- Fig. 1a: eine schematische Draufsicht auf ein Lichtscheibenmikroskop;
- Fig. 1b: eine schematische Seitenansicht des Lichtscheibenmikroskops aus Figur 1a;
- Fig. 2: eine schematische Ansicht einer Bildsensoreinheit;
- Fig. 3a: ein vereinfachtes Schaltbild eines CMOS-Bildsensors;
- Fig. 3b: einen Verlauf von Steuersignalen für eine Belichtung;
- Fig. 4: einen Verlauf des Auslesens der Bilddaten einer Bildsensoreinheit gemäß dem Stand der Technik;
- Fig. 5: einen erfindungsgemäßen Verlauf des Auslesens der Bilddaten einer Bildsensoreinheit;
- Fig. 6: einen weiteren erfindungsgemäßen Verlauf des Auslesens der Bilddaten einer Bildsensoreinheit;
- Fig. 7: einen nochmals weiteren erfindungsgemäßen Verlauf des Auslesens der Bilddaten einer Bildsensoreinheit und
- Fig. 8: einen nochmals weiteren erfindungsgemäßen Verlauf des Auslesens der Bilddaten einer Bildsensoreinheit.

### Wege zur Ausführung der Erfindung

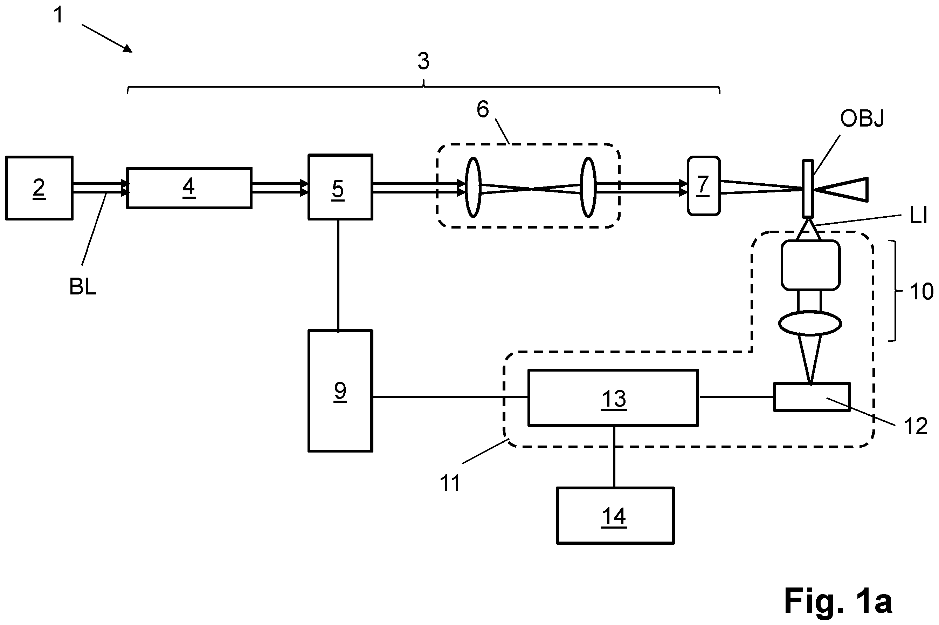

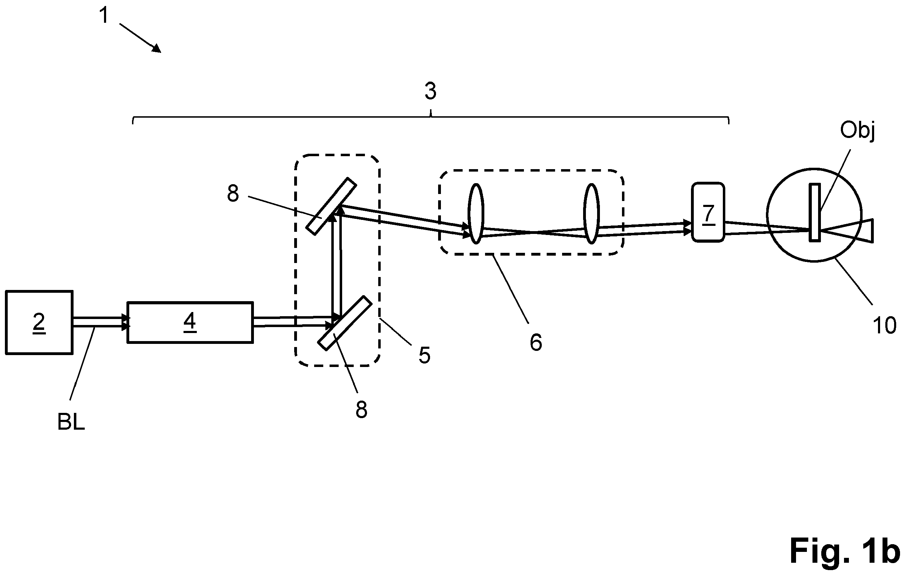

Figur 1a zeigt beispielhaft eine schematische Draufsicht auf ein Lichtscheibenmikroskop 1 und Figur 1b eine schematische Seitenansicht dieses Lichtscheibenmikroskops 1. Das Lichtscheibenmikroskop 1 ist dabei zum Abtasten eines Objekts OBJ und zur Erfassung eines Bildes dieses Objekts OBJ ausgebildet.

Hierzu verfügt das Lichtscheibenmikroskop 1 über eine Lichtquelle 2, von der Beleuchtungslicht BL ausgegeben wird. Das Beleuchtungslicht BL wird von einer Optikanordnung 3 von der Lichtquelle 2 zum Objekt OBJ geführt. Die Optikanordnung 3 umfasst dabei, von der Lichtquelle 2 ausgehend, ein Lichtführungsmittel 4, eine Ablenkeinheit 5, ein Relais-Optiksystem 6 sowie ein Beleuchtungsobjektiv 7. Auch eine andere, dem Fachmann geläufige Anordnung optischer Komponenten in der Optikanordnung 3 ist denkbar. Bei dem Lichtführungsmittel 4 kann es sich beispielsweise um einen Lichtleiter handeln, es sind aber auch Anordnungen von Linsen denkbar. Die Ablenkeinheit 5 umfasst zwei Spiegel 8, von denen zumindest einer um mindestens eine Achse drehbar ist, so dass das Beleuchtungslicht BL derart abgelenkt werden kann, dass es unterschiedliche Bereiche des Objekts OBJ beleuchtet. Die Steuerung der Ablenkeinheit 5 erfolgt dabei über eine Ablenksteuereinheit 9, die insbesondere eine Stelleinheit, beispielsweise einen Stellmotor, zum Drehen des Spiegels 8 ansteuert. Das Relais-Optiksystem 6, das zum Beispiel zwei Linsen umfasst, leitet das Beleuchtungslicht BL von der Ablenkeinheit 5 zum Beleuchtungsobjektiv 7, von dem es auf das Objekt OBJ fokussiert wird. Dabei kann das Beleuchtungslicht BL auf einen Punkt des Objekts OBJ fokussiert werden, es ist aber auch denkbar, dass das Beleuchtungsobjektiv 7 eine Zylinderlinse umfasst, so dass das Beleuchtungslicht BL das Objekt OBJ als Lichtscheibe erreicht.

Das beleuchtete Objekt OBJ gibt sodann wiederum Licht LI ab, beispielsweise durch Streuung des Beleuchtungslichts BL oder durch Fluoreszenz. Die Abgabe des Lichts LI erfolgt dabei nur in den Bereichen des Objekts OBJ, die vom Beleuchtungslicht BL beleuchtet sind.

Das vom Objekt OBJ abgegebene Licht LI wird von einer Objektiveinheit 10 einer Bildaufnahmevorrichtung 11 geführt und auf eine Bildsensoreinheit 12 der Bildaufnahmevorrichtung 11 fokussiert. Die Bildsensoreinheit 12 umfasst dabei eine Vielzahl von in einer Sensormatrix angeordneten Bildsensoren, die mittels einer Bildaufnahmesteuereinheit 13 zeilenweise angesteuert und ausgelesen werden können.

Um störendes Licht LI aus den nicht beleuchteten Bereichen des Objekts OBJ, das beispielsweise durch Mehrfach-Streuung erzeugt wird, zu unterdrücken, wird die Bildsensoreinheit 12 von der Bildaufnahmesteuereinheit 13 derart gesteuert, dass nur Bildzeilen aufgenommen werden, die dem beleuchteten Bereich des Objekts OBJ entsprechen. Bei einer durch die Ablenkeinheit 5 hervorgerufenen Veränderung des beleuchteten Bereichs des Objekts OBJ werden auch die aufzunehmenden Bildzeilen durch die Bildaufnahmesteuereinheit 13 geändert. Hierzu ist eine Kommunikation zwischen der Bildaufnahmesteuereinheit 13 und der Ablenksteuereinheit 9 vorgesehen. Diese Kommunikation kann derart ausgebildet sein, dass von der Ablenksteuereinheit 9, die dann einem Master entspricht, Steuersignale zur Bildaufnahmesteuereinheit 13, die dann einem Slave entspricht, geschickt werden, wobei die Steuersignale die Veränderung des beleuchteten Bereichs des Objekts OBJ kommunizieren. Alternativ hierzu kann die Bildaufnahmesteuereinheit 13 der Master sein und der Ablenksteuereinheit 9 Signale schicken, die eine Veränderung der aufzunehmenden Bildzeilen kommunizieren. In diesem Fall wird die Ablenkeinheit 5 derart von der Bildaufnahmesteuereinheit 13 gesteuert, dass diejenigen Bereiche des Objekts OBJ vom Beleuchtungslicht BL beleuchtet werden, die den aufzunehmenden Bildzeilen der Bildsensoreinheit 12 entsprechen. Vorzugsweise erlaubt die Kommunikation zwischen der Ablenksteuereinheit 9 und der Bildaufnahmesteuereinheit 13 auch das Senden von Informationen vom Slave zum Master, beispielsweise das Senden von Fehlercodes.

Die mittels der Bildaufnahmesteuereinheit 13 ausgelesenen Bilddaten der Bildsensoreinheit 12 können in einem Rohdatenformat gespeichert und zu einem späteren Zeitpunkt ausgewertet werden. Im vorliegenden Ausführungsbeispiel ist jedoch eine Auswerteeinheit 14 mit der Bildaufnahmesteuereinheit 13 verbunden. Bei der Auswerteeinheit 14 kann es sich dabei um einen dedizierten Bildprozessor oder aber auch um einen Computer mit der entsprechenden Software handeln. Die Auswerteeinheit 14 kann, wie im Ausführungsbeispiel dargestellt, eine separate Einheit darstellen, sie kann aber auch ein Teil der Bildaufnahmevorrichtung 11 sein.

Die Auswerteeinheit 14 wertet dabei die Bilddaten räumlich und zeitlich aus. Vorteilhafterweise fließen in diese Auswertung zusätzlich zu den Bilddaten noch weitere Informationen ein, beispielsweise über die zeitliche und räumliche Veränderung des Beleuchtungslichts BL, ein bekanntes Strahlprofil des Beleuchtungslichts BL oder ein Modell der zeitlichen Entwicklung des Objekts OBJ. Zur weiteren Verbesserung der räumlichen und/oder zeitlichen Auflösung kann zudem eine Dekonvolution durchgeführt werden, in die auch die weiteren Informationen einfließen können. Die zu verwendenden Algorithmen hängen dabei von den Details des Lichtscheibenmikroskops 1 und des Objekts OBJ ab, sind dem Fachmann aber allgemein geläufig.

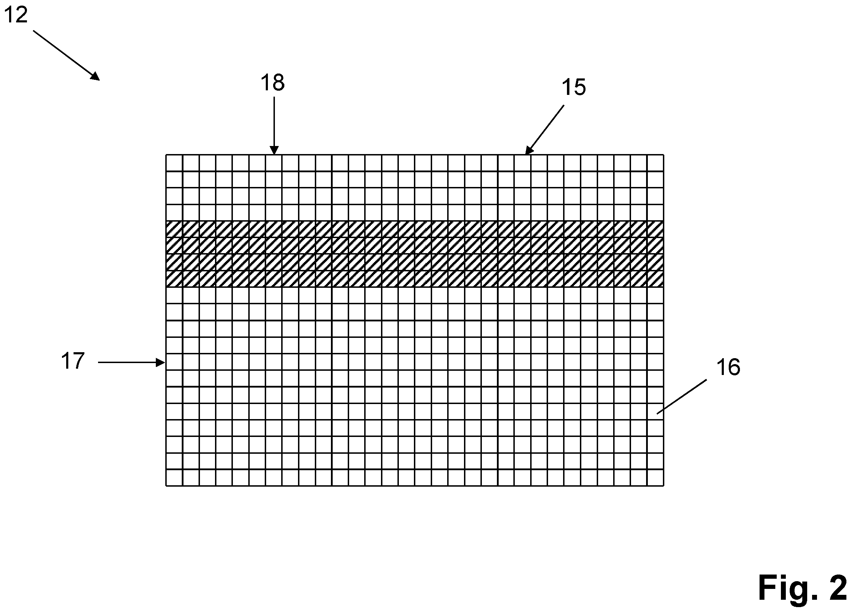

Figur 2 zeigt eine schematische Ansicht einer Bildsensoreinheit 12 mit einer Vielzahl von in einer Sensormatrix 15 angeordneten Bildsensoren 16. Die Bildsensoren 16 sind dabei in Bildzeilen 17 und Bildspalten 18 angeordnet und können zeilenweise angesteuert und ausgelesen werden. Selbstverständlich ist es auch möglich, dass die Bildsensoren 16 spaltenweise angesteuert und ausgelesen werden, dies entspricht dann einer Drehung der Bildsensoreinheit 12 um 90°. In Figur 2 schraffiert dargestellt sind vier zusammenhängende Bildzeilen 17, von denen aktuell Bilddaten aufgenommen werden. Das heißt, bei diesen Bildzeilen 17 wurde die Belichtung schon gestartet aber noch nicht gestoppt bzw. ausgelesen. Es sind auch andere Zeilenkonfigurationen von aufzunehmenden Bildzeilen 17 denkbar, insbesondere mit weniger oder mehr zusammenhängenden Bildzeilen 17. Auch können sich aus einer Zeilenausgangskonfiguration mit einer vorgegebenen Anzahl an zusammenhängenden Bildzeilen 17 im Verlauf der Abtastung des Objekts OBJ durch das Beleuchtungslicht BL und die sich entsprechend ändernde, im Wesentlichen dem Beleuchtungslicht BL folgende, Zeilenkonfiguration von aufzunehmenden Bildzeilen 17 auch Zeilenkonfigurationen mit nicht zusammenhängenden Bildzeilen 17 ergeben. In bestimmten Fällen lässt sich zudem mit Zeilenkonfigurationen mit nicht zusammenhängenden Bildzeilen 17 auch die räumliche Auflösung des Lichtscheibenmikroskops verbessern.

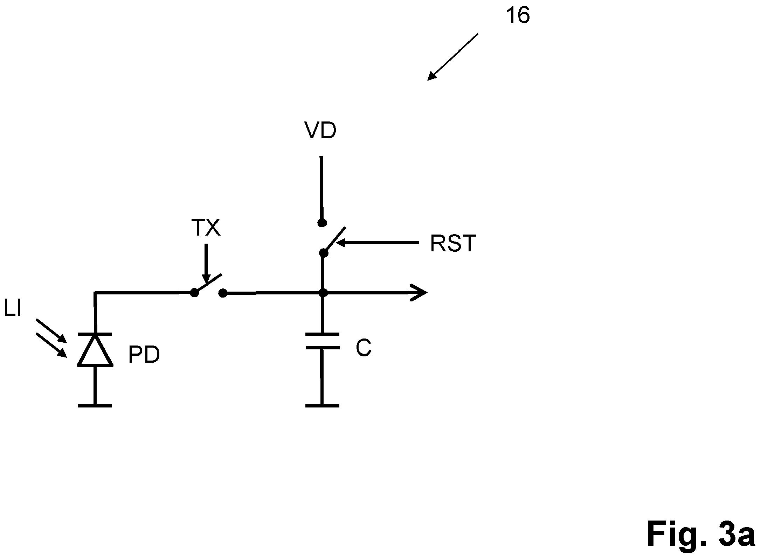

Figur 3a zeigt ein vereinfachtes Schaltbild eines als CMOS-Bildsensor ausgebildeten Bildsensors 16. Dabei fällt das vom Objekt OBJ abgegebene Licht LI auf eine Fotodiode PD und wird dort in elektrische Ladung umgewandelt. Durch kurzes Schließen eines Transfergates TX wird diese elektrische Ladung auf ein Speicherelement C, das vereinfacht als Kondensator dargestellt ist, übertragen. Die vom Speicherelement C gespeicherte Ladung wird sodann durch nachfolgende, hier nicht dargestellte, Schaltungen weiterverarbeitet und digitalisiert. Auf diese Weise wird die mittels der Fotodiode PD erzeugte elektrische Ladung als Beleuchtungswert des Bildsensors 16 ausgelesen. Zu Beginn einer neuen Belichtung werden das Transfergate TX und ein Rücksetz-Gate RST kurz geschlossen, so dass die Fotodiode PD und das Speicherelement C mit der Löschspannung VD in Kontakt sind. Hierdurch werden die von der Fotodiode PD erzeugten und vom Speicherelement C gespeicherten Ladungsträger von der Fotodiode PD bzw. vom Speicherelement C entfernt. Sobald das Transfergate TX und das Rücksetz-Gate RST wieder geöffnet sind, beginnt eine neue Belichtung.

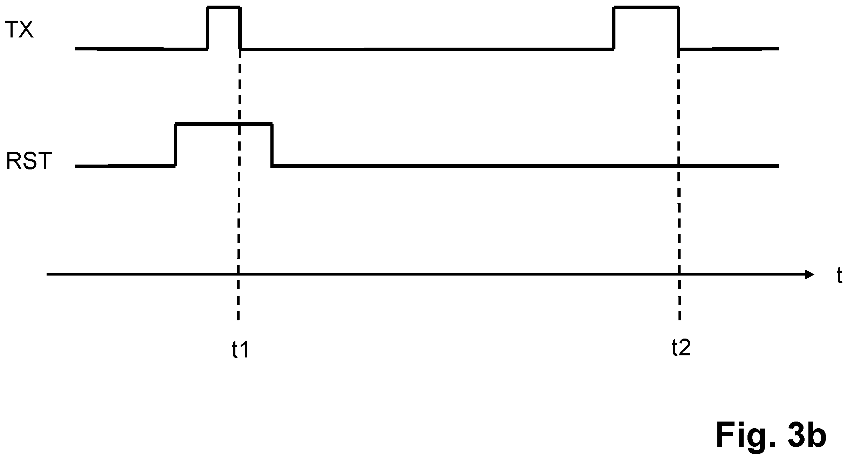

Die Schaltsignale des Transfergates TX und Rücksetz-Gates RST als Funktion der Zeit t für eine typische Belichtung eines Bildsensors 16 sind in Figur 3b gezeigt. Durch gleichzeitiges Schließen des Transfergates TX und Rücksetz-Gates RST werden die von der Fotodiode PD erzeugten und dem Speicherelement C gespeicherten Ladungsträger entfernt, so dass beim Öffnen des Transfergates TX keine freien Ladungsträger mehr vorhanden sind und die Belichtung beginnt (t1). Während der Belichtung werden von der Fotodiode PD Ladungsträger erzeugt, die zum Ende der Belichtung durch ein kurzes Schließen des Transfergates TX auf das Speicherelement C übertragen werden (t2). Anschließend wird das Speicherelement C ausgelesen, woraufhin der Bildsensor 16 für eine nächste Belichtung bereit ist, die wiederum durch ein kurzes Schließen des Transfergates TX und Rücksetz-Gates RST gestartet wird.

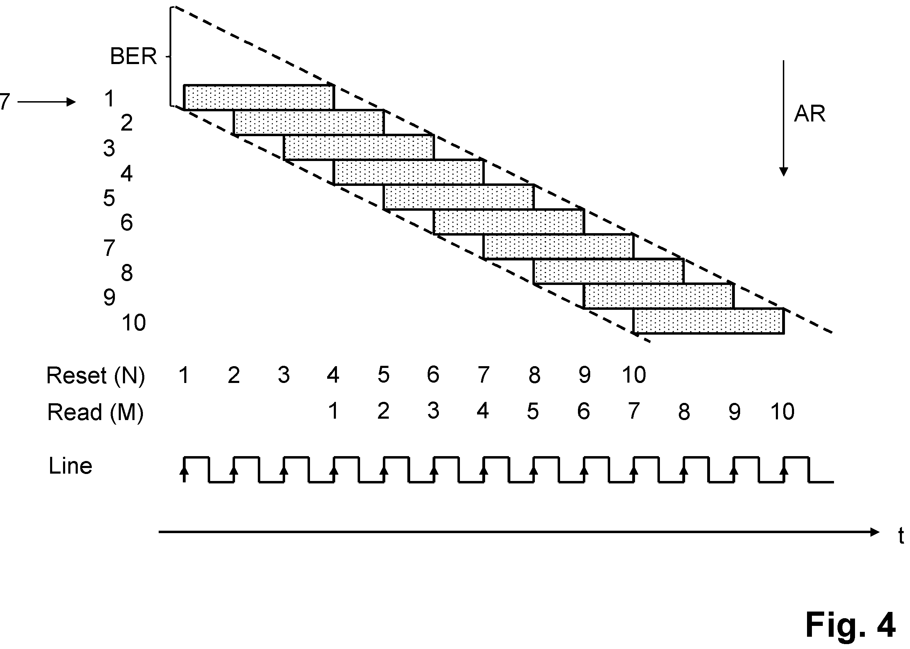

Figur 4 zeigt einen Verlauf des Auslesens der Bilddaten einer Bildsensoreinheit 12 gemäß dem Stand der Technik. Der Verlauf wird beispielhaft an zehn Bildzeilen 17 als Funktion der Zeit t gezeigt. Die Bildzeilen 17, die jeweils belichtet werden, sind dabei mit einer gepunkteten Schraffur und der vom Beleuchtungslicht BL beleuchtete Bereich BER der Bildsensoreinheit 12 durch gestrichelte Linien begrenzt dargestellt. Die Bildzeilen 17, die belichtet werden, folgen dabei in einer Abtastrichtung AR dem Verlauf des beleuchteten Bereichs BER. Hierbei wäre es auch möglich, dass die Bildzeilen 17, die belichtet werden, einen Bereich der Bildsensoreinheit 12 abdecken, der kleiner oder größer als der beleuchtete Bereich BER ist, wobei ersteres eine größere räumliche Auflösung bietet und letzteres sicherstellt, dass der gesamte beleuchtete Bereich BER erfasst wird.

Im vorliegenden Beispiel werden drei Bildzeilen 17 gleichzeitig belichtet. Je nach Größe der Bildsensoreinheit 12, Breite des beleuchteten Bereichs BER und gewünschter räumlicher Auflösung ist auch eine andere Anzahl von Bildzeilen 17, die gleichzeitig belichtet werden, denkbar. Am Ende eines jeden Aufnahmeschritts wird die jeweils oberste der zu belichtenden Bildzeilen 17 ausgelesen und die Belichtung der Bildzeile 17, die sich unterhalb an die unterste der zu belichtenden Bildzeilen 17 anschließt, gestartet. Es ergibt sich ein treppenförmiges Muster der zu belichtenden Bildzeilen 17, also ein Rolling-Shutter.

In der Figur sind auch die Nummern der Bildzeilen 17 angegeben, für die die Belichtung gestartet wird (Reset) und die ausgelesen werden (Read). Dabei sind die Nummern für das Auslesen (Read) gegenüber den Nummern für das Starten der Belichtung (Reset) um drei Aufnahmeschritte nach hinten versetzt, was auch das gleichzeitige Belichten von drei Bildzeilen 17 ergibt.

Ein mögliches Steuersignal (Line) für die Steuerung der Bildsensoreinheit 12 ist ebenfalls in der Figur dargestellt. Es handelt sich dabei um ein Rechtecksignal, das zu Beginn jedes Aufnahmeschritts eine steigende Flanke und während des Aufnahmeschritts eine fallende Flanke aufweist. Die steigende Flanke signalisiert dabei der Bildsensoreinheit 12 den Beginn des nächsten Aufnahmeschritts, wodurch die Nummer der zu startenden und auszulesenden Bildzeile 17 um eins erhöht wird und das Starten bzw. Auslesen der jeweiligen Bildzeile 17 durchgeführt wird.

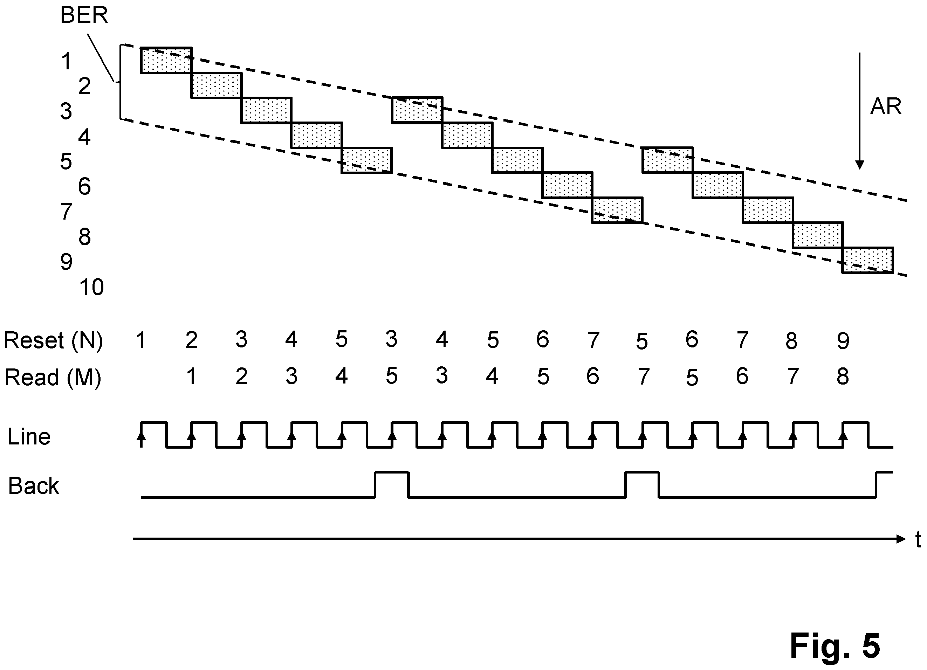

Figur 5 zeigt einen Verlauf eines erfindungsgemäßen Ausführungsbeispiels des Auslesens der Bilddaten einer Bildsensoreinheit 12. Bei diesem Ausführungsbeispiel wird eine Bildzeile 17 gleichzeitig belichtet. Dementsprechend sind die Nummern für das Auslesen (Read) der Bildzeile 17 gegenüber den Nummern für das Starten der Belichtung (Reset) einer neuen Bildzeile 17 um eins verschoben. Des Weiteren ist der Bereich, der von der Bildsensoreinheit 12 erfasst wird, etwas größer als der vom Beleuchtungslicht BL beleuchtete Bereich BER. Hierdurch wird die Beleuchtung durch das Beleuchtungslicht BL vollständig ausgenutzt.

Erfindungsgemäß wird die aufzunehmende Bildzeile 17 nach einer vorgegebenen Anzahl von Aufnahmeschritten, in vorliegenden Fall fünf Aufnahmeschritte, entgegen der Abtastrichtung AR um eine vorgegebene Anzahl von Bildzeilen 17, in diesem Fall zwei Bildzeilen 17, versetzt. Die nun zu belichtende Bildzeile 17 ist gegenüber der anfangs zu belichtenden Bildzeile 17 um zwei Bildzeilen 17 in Abtastrichtung 17 versetzt. Die Abtastung erfolgt also in einem schiefen Sägezahnmuster.

Gegenüber dem aus dem Stand der Technik bekannten Rolling-Shutter erzielt man mit der erfindungsgemäßen Abtastung eine höhere zeitliche und räumliche Auflösung. Zur Auswertung der Bilddaten mittels der Auswerteeinheit 14 wird dabei auf die vorangegangene Beschreibung verwiesen.

Eine mögliche Steuerung für die Bildsensoreinheit 12 ist ebenfalls in Figur 5 dargestellt. Zuzüglich zum Steuersignal (Line) für den Zeilenfortschritt ist noch ein Rücksprungbit (Back) vorgesehen. Zunächst wird die Steuerung der zu startenden Bildzeilen 17 (Reset) beschrieben. Ist das Rücksprungbit (Back) "0", dann wird bei jeder steigenden Flanke des Steuersignals (Line) die Nummer der zu startende Bildzeile 17 (Reset) um eins erhöht. Ist das Rücksprungbit (Back) bei einer steigenden Flanke des Steuersignals (Line) jedoch "1", so wird die zu startenden Bildzeile 17 (Reset) um zwei Bildzeilen 17 entgegen der Abtastrichtung AR versetzt. Es ergibt sich also der für das schiefe Sägezahnmuster charakteristische Sprung. Die Steuerung der auszulesenden Bildzeilen 17 (Read) kann ausgehend hiervon auf zwei verschiedene Varianten erfolgen. Zum einen kann exakt zeitversetzt um einen Aufnahmeschritt diejenige Bildzeilen 17 ausgelesen werden, für die vor einem Aufnahmeschritt die Belichtung gestartet wurde. Zum anderen kann ein weiteres, hier nicht gezeigtes, Rücksprungbit (Back2) vorgesehen sein, das an Stelle des Rücksprungbits (Back) die Nummern der auszulesenden Bildzeilen 17 beeinflusst. Ist das weitere Rücksprungbit (Back2) "0", so wird die Nummer der auszulesenden Bildzeile 17 um eins erhöht, ist es "1", so erfolgt der Versatz entgegen der Abtastrichtung AR. Der zeitliche Verlauf des weiteren Rücksprungbits (Back2) entspricht dabei dem des Rücksprungbits (Back), allerdings um einen Aufnahmeschritt nach hinten versetzt.

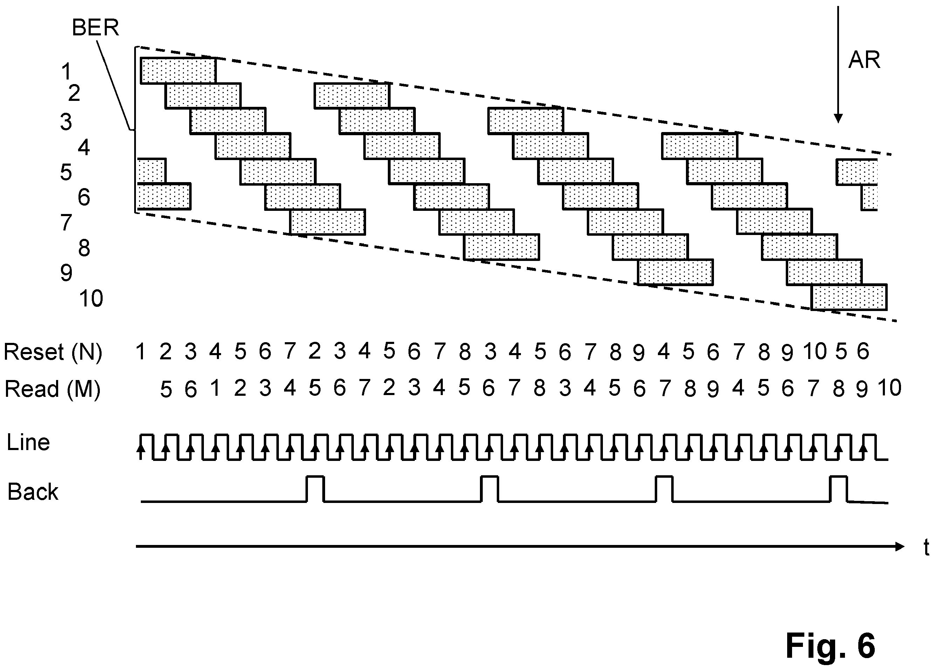

Figur 6 zeigt einen Verlauf eines weiteren Ausführungsbeispiels des Auslesens der Bilddaten einer Bildsensoreinheit 12. In diesem Ausführungsbeispiel werden drei Bildzeilen 17 gleichzeitig belichtet, die Nummern für das Auslesen der Bildzeilen 17 (Read) sind also um drei Aufnahmeschritte gegenüber den Nummern für das Starten der Belichtung (Reset) versetzt. Nach jeweils sieben Aufnahmeschritten wird die aufzunehmende Bildzeile 17 um fünf Bildzeilen 17 entgegen der Abtastrichtung AR versetzt. Die so erhaltene Zeilenzwischenkonfiguration ist gegenüber der Zeilenausgangkonfiguration um eine Bildzeile 17 in Abtastrichtung AR versetzt. Es ergibt sich also wieder ein charakteristisches schiefes Sägezahnmuster. Die Steuerung der Bildsensoreinheit 12 erfolgt dabei analog zum vorherigen Ausführungsbeispiel.

Die Wahl der gleichzeitig aufzunehmenden Bildzeilen 17, der Anzahl der Aufnahmeschritte bis zum Versatz entgegen der Abtastrichtung AR sowie der Anzahl der Bildzeilen 17, um die dieser Versatz erfolgt, hängt dabei unter anderem von den Details des Lichtscheibenmikroskops 1, der Bildsensoreinheit 12 und des zu untersuchenden Objekts OBJ ab. Diese Werte zusammen mit der vorgegebenen oder einstellbaren Wartezeit zwischen zwei Aufnahmeschritten bestimmt zudem das Voranschreiten des abgetasteten Bereichs des Objekts OBJ, der dem vom Beleuchtungslicht BL beleuchteten Bereich BER des Objekts OBJ entsprechen sollte.

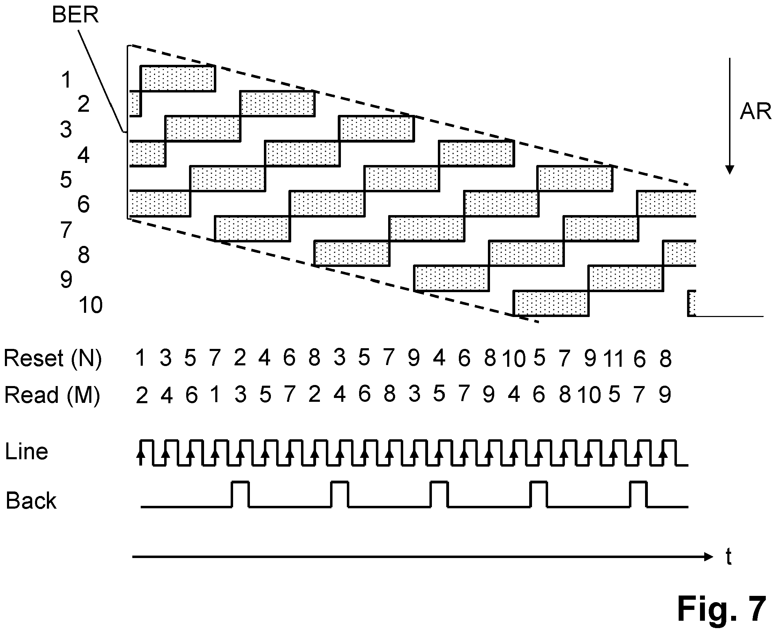

Figur 7 zeigt einen Verlauf eines nochmals weiteren Ausführungsbeispiels des Auslesens der Bilddaten einer Bildsensoreinheit 12. Hierbei ergeben die aufzunehmenden Bildzeilen 17 in der Zeilenausgangskonfiguration keinen zusammenhängenden Bereich, sondern es befindet sich zwischen zwei aufzunehmenden Bildzeilen 17 jeweils eine Bildzeile 17, die nicht belichtet wird. Eine solche Zeilenausgangskonfiguration ist beispielsweise dann vorteilhaft, wenn Objekte OBJ mit besonders hohen räumlichen Frequenzen untersucht werden sollen. Bei jedem Steuersignal (Line) wird die Nummer der Bildzeile 17, die ausgelesen werden soll, um zwei erhöht. Nach vier Aufnahmeschritten erfolgt dann ein Versatz der Bildzeile 17, die ausgelesen werden soll, um fünf Bildzeilen 17 entgegen der Abtastrichtung. Es werden nun diejenigen Bildzeilen 17 ausgelesen, die vorher die Lücke zwischen zwei aufzunehmenden Bildzeilen 17 waren. Bei der Auswertung der Bilddaten durch die Auswerteeinheit 14 müssen die Besonderheiten dieses Verlaufs aufzunehmender Bildzeilen 17 selbstverständlich berücksichtigt werden.

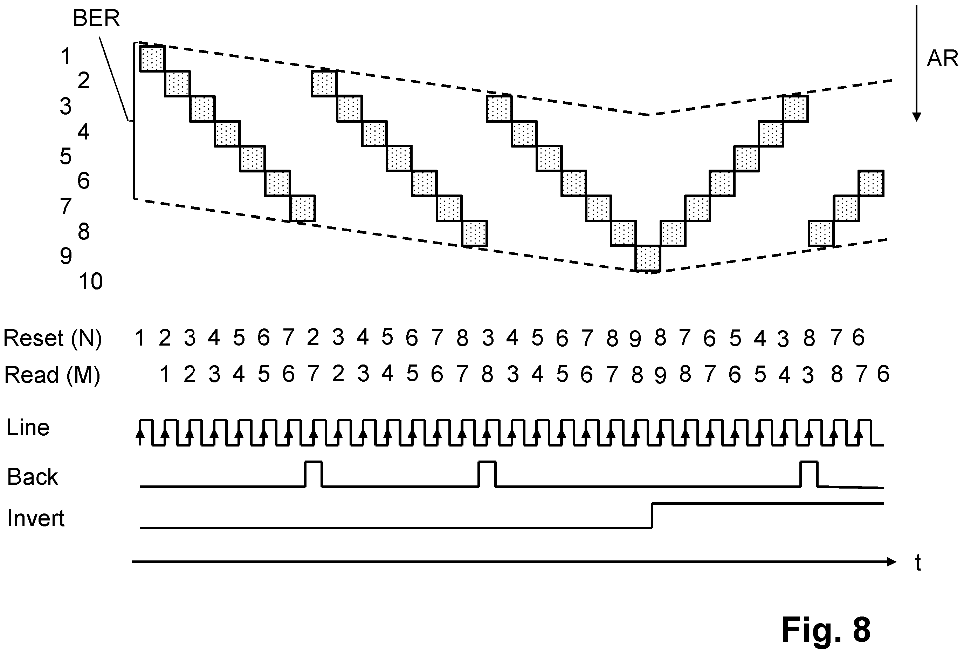

Schließlich zeigt Figur 8 einen Verlauf eines nochmals weiteren Ausführungsbeispiels des Auslesens der Bilddaten einer Bildsensoreinheit 12. Bei diesem Verlauf wird jeweils eine Bildzeile 17 gleichzeitig aufgenommen, nach jedem Aufnahmeschritt erfolgt ein Fortschreiten der aufzunehmenden Bildzeile 17 um eine Bildzeile 17 in Abtastrichtung AR und nach sieben Aufnahmeschritten erfolgt ein Versatz der aufzunehmenden Bildzeile 17 um fünf Bildzeilen 17 entgegen der Abtastrichtung AR. Nach einer vorgegebenen Anzahl von Aufnahmeschritten, vorliegend beispielhaft nach 21 Aufnahmeschritten, wird die Abtastrichtung AR umgekehrt. Das Umkehren der Abtastrichtung AR fällt dabei vorzugsweise mit dem Umkehren der Richtung zusammen, in der das Objekt OBJ vom Beleuchtungslicht BL abgetastet wird, so dass die aufzunehmenden Bildzeilen 17 weiterhin dem vom Beleuchtungslicht BL beleuchteten Bereich BER folgen.

Auch kann alternativ zur Ausführungsvariante gemäß Figur 8 nicht erst nach einer vorgegebenen Anzahl von Aufnahmeschritten die Abtastrichtung AR umgekehrt werden, sondern auch bereits von Anfang an entsprechend mit umgekehrter Abtastrichtung AR abgetastet werden.

Als Steuerung ist hier beispielsweise ein Richtungsbit (Invert) denkbar. Ist das Richtungsbit (Invert) "0", erfolgt die Abtastung in der ursprünglichen Abtastrichtung AR, das heißt, das Fortschreiten der aufzunehmenden Bildzeile 17 um eine Bildzeile 17 erfolgt in Abtastrichtung AR und der Versatz nach der vorgegebenen Anzahl von Aufnahmeschritten, hier sieben, erfolgt entgegen der Abtastrichtung AR. Ist hingegen das Richtungsbit (Invert) "1", erfolgt die Abtastung entgegen der ursprünglichen Abtastrichtung AR, das heißt, das Fortschreiten der aufzunehmenden Bildzeile 17 um eine Bildzeile 17 erfolgt entgegen der ursprünglichen Abtastrichtung AR und der Versatz nach der vorgegebenen Anzahl von Aufnahmeschritten, hier sieben, erfolgt in der ursprünglichen Abtastrichtung AR.

Selbstverständlich lässt sich das Umkehren der Abtastrichtung AR auch mit mehreren gleichzeitig aufzunehmenden Bildzeilen 17 wie in dem in Figur 6 gezeigten Ausführungsbeispiel sowie mit Zeilenausgangskonfigurationen mit nicht zusammenhängenden Bildzeilen 17 wie in dem in Figur 7 gezeigten Ausführungsbeispiel kombinieren.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrundeliegende Erfindungsgedanke verlassen wird.

### Bezugszeichenliste

- 1: Lichtscheibenmikroskop
- 2: Lichtquelle
- 3: Optikanordnung
- 4: Lichtführungsmittel
- 5: Ablenkeinheit
- 6: Relais-Optiksystem
- 7: Beleuchtungsobjektiv
- 8: Spiegel
- 9: Ablenksteuereinheit
- 10: Objektiveinheit
- 11: Bildaufnahmevorrichtung
- 12: Bildsensoreinheit
- 13: Bildaufnahmesteuereinheit
- 14: Auswerteeinheit
- 15: Sensormatrix
- 16: Bildsensor
- 17: Bildzeile
- 18: Bildspalte

- AR: Abtastrichtung
- BER: beleuchteter Bereich
- BL: Beleuchtungslicht
- C: Speicherelement
- LI: Licht
- OBJ: Objekt
- PD: Fotodiode
- RST: Rücksetz-Gate
- t: Zeit
- TX: Transfergate
- VD: Löschspannung

## Patentansprüche

1. Verfahren zum Auslesen der Bilddaten einer Bildsensoreinheit (12) mittels einer Bildaufnahmesteuereinheit (13), wobei die Bildsensoreinheit (12) eine Vielzahl von in einer Sensormatrix (15) angeordneten Bildsensoren (16) umfasst, wobei die Bildsensoren (16) zeilenweise angesteuert und ausgelesen werden, bei jedem Aufnahmeschritt zumindest eine Bildzeile (17) ausgelesen und/oder die Belichtung von zumindest einer Bildzeile (17) gestartet wird und die aufzunehmenden Bildzeilen (17) von einer Zeilenausgangskonfiguration aus nach jeweils einem Aufnahmeschritt verändert werden, wobei die aufzunehmenden Bildzeilen (17) nach jedem Aufnahmeschritt in eine vorgegebene Abtastrichtung (AR) versetzt werden, **dadurch gekennzeichnet, dass** die aufzunehmenden Bildzeilen (17) nach einer vorgegebenen Anzahl von Aufnahmeschritten entgegen der Abtastrichtung (AR) derart um eine vorgegebene Anzahl von Bildzeilen (17) versetzt werden, dass die sich dann ergebende Zeilenzwischenkonfiguration gegenüber der Zeilenausgangskonfiguration versetzt ist, so dass die aufzunehmenden Bildzeilen (17) im zeitlichen Verlauf ein schiefes Sägezahnmuster ergeben.

2. Verfahren nach Anspruch 1, **dadurch gekennzeichnet, dass** die aufzunehmenden Bildzeilen (17) nach jedem Aufnahmeschritt um eine vorgegebene Anzahl an Bildzeilen (17), vorzugsweise um eine Bildzeile (17), in Abtastrichtung (AR) versetzt werden.

3. Verfahren nach Anspruch 1 oder 2, **dadurch gekennzeichnet, dass** die Zeilenzwischenkonfiguration gegenüber der Zeilenausgangskonfiguration in Abtastrichtung (AR) versetzt ist.

4. Verfahren nach einem der Ansprüche 1 bis 3, **dadurch gekennzeichnet, dass** zumindest zeitweise die aufzunehmenden Bildzeilen (17) einen zusammenhängenden Bildzeilenbereich ergeben.

5. Verfahren nach einem der Ansprüche 1 bis 4, **dadurch gekennzeichnet, dass** die Abtastrichtung (AR) nach einer vorgegebenen Anzahl von Aufnahmeschritten umgekehrt wird.

6. Verfahren nach einem der Ansprüche 1 bis 5, **dadurch gekennzeichnet, dass** eine Wartezeit zwischen zwei Aufnahmeschritten vorgegeben ist oder eingestellt wird.

7. Verfahren nach einem der Ansprüche 1 bis 6, **dadurch gekennzeichnet, dass** die Bildsensoreinheit (12) eine CMOS-Bildsensoreinheit ist und die Bildsensoren (16) CMOS-Bildsensoren sind.

8. Verfahren zum Erfassen eines Objekts (OBJ) mittels eines Lichtscheibenmikroskops (1), wobei von einer Lichtquelle (2) Beleuchtungslicht (BL) ausgegeben wird, das Beleuchtungslicht (BL) von einer Optikanordnung (3) geführt und von einer Ablenksteuereinheit (9) mittels einer Ablenkeinheit (5) der Optikanordnung (3) abgelenkt wird, so dass das Beleuchtungslicht (BL) fortlaufende Bereiche (BER) des Objekts (OBJ) beleuchtet, das vom Objekt (OBJ) abgegebene Licht (LI) von einer Objektiveinheit (10) geführt und von einer Bildsensoreinheit (12) erfasst wird, wobei die Bildsensoreinheit (12) von einer Bildaufnahmesteuereinheit (13) gesteuert wird, **dadurch gekennzeichnet, dass** die Bildaufnahmesteuereinheit (13) die Bildsensoreinheit (12) nach dem Verfahren nach einem der Ansprüche 1 bis 7 steuert und die Ablenksteuereinheit (9) mit der Bildaufnahmesteuereinheit (13) derart kommuniziert, dass die von der Bildsensoreinheit (12) aufzunehmenden Bildzeilen (17) den vom Beleuchtungslicht (BL) beleuchteten Bereichen (BER) des Objekts (OBJ) folgen.

9. Verfahren nach Anspruch 8, **dadurch gekennzeichnet, dass** die Ablenksteuereinheit (9) die Bildaufnahmesteuereinheit (13) steuert.

10. Verfahren nach Anspruch 8, **dadurch gekennzeichnet, dass** die Bildaufnahmesteuereinheit (13) die Ablenksteuereinheit (9) steuert.

11. Verfahren nach einem der Ansprüche 8 bis 10, **dadurch gekennzeichnet, dass** die aufgenommenen Bilddaten mittels einer Auswerteeinheit (14) ausgewertet werden.

12. Verfahren nach Anspruch 11, **dadurch gekennzeichnet, dass** bei der Auswertung der Bilddaten mittels der Auswerteeinheit (14) eine Dekonvolution, vorzugsweise unter Berücksichtigung eines bekannten Strahlprofils des Beleuchtungslichts (BL), durchgeführt wird.

13. Bildaufnahmevorrichtung zum Aufnehmen eines Bilds von einem Objekt (OBJ), mit einer Objektiveinheit (10) zum Führen des Lichts (LI) vom Objekt (OBJ), einer Bildsensoreinheit (12) zum Erfassen des Lichts (LI) vom Objekt (OBJ) und einer Bildaufnahmesteuereinheit (13) zum Steuern der Bildsensoreinheit (12), wobei die Bildsensoreinheit (12) eine Vielzahl von in einer Sensormatrix (15) angeordneten Bildsensoren (16) umfasst und wobei die Bildsensoren (16) zeilenweise mittels der Bildaufnahmesteuereinheit (13) ansteuerbar und auslesbar sind, **dadurch gekennzeichnet, dass** die Bildaufnahmesteuereinheit (13) dazu ausgebildet ist, das Verfahren nach einem der Ansprüche 1 bis 7 durchzuführen.

14. Bildaufnahmevorrichtung nach Anspruch 13, **dadurch gekennzeichnet, dass** die Bildsensoreinheit (12) eine CMOS-Bildsensoreinheit ist und die Bildsensoren (16) CMOS-Bildsensoren sind.

15. Lichtscheibenmikroskop zum Abtasten eines Objekts (OBJ) mit einer Lichtquelle (2) zum Ausgeben des Beleuchtungslichts (BL), einer Optikanordnung (3) zum Führen des Beleuchtungslichts (BL), einer Objektiveinheit (10) zum Führen des vom Objekt (OBJ) abgegebenen Lichts (LI), einer Bildsensoreinheit (12) zum Erfassen des vom Objekt (OBJ) abgegebenen Lichts (LI) und einer Bildaufnahmesteuereinheit (13) zum Steuern der Bildsensoreinheit (12), wobei die Optikanordnung (3) eine Ablenkeinheit (5) zum Ablenken des Beleuchtungslichts (BL) umfasst, wobei das Lichtscheibenmikroskop (1) eine Ablenksteuereinheit (9) zum Steuern der Ablenkeinheit (5) umfasst und wobei das Lichtscheibenmikroskop (1) Kommunikationsmittel zur Kommunikation zwischen der Bildaufnahmesteuereinheit (13) und der Ablenksteuereinheit (9) umfasst, **dadurch gekennzeichnet, dass** die Bildaufnahmesteuereinheit (13) und die Ablenksteuereinheit (9) dazu ausgebildet sind, das Verfahren nach einem der Ansprüche 8 bis 12 durchzuführen.

16. Lichtscheibenmikroskop nach Anspruch 15, **dadurch gekennzeichnet, dass** das Lichtscheibenmikroskop (1) eine Auswerteeinheit (14) zum Auswerten der von der Bildsensoreinheit (12) aufgenommenen Bilddaten aufweist.
